# EUROPÄISCHE PATENTSCHRIFT

(11) **EP 0 644 105 B1**
(45) Veröffentlichungstag und Bekanntmachung des Hinweises auf die Patenterteilung: **09.07.1997**
(21) Anmeldenummer: 94114480.0
(22) Anmeldetag: 15.09.1994
(51) Int. Cl.: B62D 47/02, B60D 5/00

(54) **Vorrichtung zur Steuerung der Knickbewegungen zwischen Teilfahrzeugen von Gelenkomnibussen**
Device for controlling the articulated mouvements between sections of articulated busses
Dispositif pour commander les mouvements d'articulation entre les parties de véhicule des bus articulés

(30) Priorität: 17.09.1993 DE 4331627
(43) Veröffentlichungstag der Anmeldung: 22.03.1995
(73) Patentinhaber: HÜBNER Gummi- und Kunststoff GmbH, D-34123 Kassel (DE)
(72) Erfinder: Koch, Robert, D-37242 Bad Sooden-Allendorf (DE)
(74) Vertreter: Walter, Helmut, Dipl.-Ing.

(56) Entgegenhaltungen:
- DE-A- 2 929 022
- DE-A- 3 340 446
- US-A- 3 502 350

## Beschreibung

Die vorliegende Erfindung bezieht sich auf eine Vorrichtung zur Steuerung bzw. Dämpfung der Knickbewegungen zwischen Teilfahrzeugen eines Gelenkomnibusses um die Hochachse eines Drehkranzgelenkes, in dem die beiden Teilfahrzeuge um die Hochachse relativ zueinander schwenkbar miteinander verbunden sind, wobei ein Drehring des Drehkranzgelenkes dem einen, ein zweiter Drehring des Drehkranzgelenkes dem zweiten Teilfahrzeug zuordnet ist und wobei weiter die Steuerungs- bzw. Dämpfungsvorrichtung eine Kolben-Zylinder-Einheit ist.

Es ist vielfach üblich, Gelenkomnibusse mit einem Drehkranzgelenk auszurüsten, das die beiden Teilfahrzeuge eines Gelenkomnibusses so miteinander verbindet, daß die beiden Teilfahrzeuge beim Durchfahren von Kurven um die Hochachse des Drehkranzgelenkes relativ zueinander Knickbewegungen ausführen können. Ein solches Drehkranzgelenk weist dabei im allgemeinen zwei konzentrisch zueinander angeordnete Drehringe auf, von denen jeweils einer einem der beiden Teilfahrzeuge zugeordnet ist und die beide relativ zueinander um die Gelenkhochachse verdrehbar sind, so daß die beiden Teilfahrzeuge relativ zueinander Knickbewegungen um die vertikale Gelenkhochachse als Knickachse ausführen können. Die Drehringe sind so einander zugeordnet, daß im Drehkranzgelenk das im Regelfall einachsige zweite Teilfahrzeug auf dem im Regelfall mehrachsigen ersten Teilfahrzeug abgestützt werden kann und außerdem Brems- und Antriebskräfte zwischen den beiden Teilfahrzeugen in dem Gelenk übertragen werden können. Zwischen den Drehringen befinden sich Wälzkörper.

Um das Fahrverhalten des Gelenkomnibusses beeinflussen zu können, ist es üblich, die Knickbewegungen zwischen den beiden Teilfahrzeugen zu steuern, wobei die Steuerung im einfachsten Fall eine Dämpfung ist, was besagen soll, daß Bewegungen zwischen den beiden Teilfahrzeugen um die vertikale Gelenkhochachse grundsätzlich zulässig sind, soweit das für die Kurvenfahrt notwendig ist, daß bei der Geradeausfahrt solche Knickbewegungen aber nur begrenzt und gegebenenfalls entgegen einem Widerstand, vorzugsweise einem progressiv zunehmenden Widerstand zulässig sind.

Dieser Steuerung bzw. Dämpfung dienen häufig Kolben-Zylinder-Einheiten. Ein Kolben ist einem Teilfahrzeug zugeordnet und in einem Zylinder mit definiertem Inhalt des anderen Teilfahrzeuges verstellbar, wobei die beiden Stirnseiten des Kolbens durch eine Drosselbohrung im Kolben miteinander verbunden sind. Bewegungen zwischen Kolben und Zylinder und damit zwischen den beiden Teilfahrzeugen führen zur Verdrängung von in dem Zylinder enthaltenem Fluid aus der einen Zylinderkammer auf der einen Seite des Kolbens durch die Drosselbohrung in die andere Zylinderkammer auf der anderen Seite des Kolbens; dadurch sind Relativbewegungen zwischen Kolben und Zylinder und damit zwischen beiden Teilfahrzeugen nur gedämpft möglich bis zum frei gewählten Ende des jeweiligen Verstellweges und die Charakteristik dieser Dämpfung ist dadurch einstellbar, daß der Querschnitt der Drosselbohrung einstellbar gemacht wird. Bei einer aktiven Steuerung werden die Relativbewegungen zwischen Kolben und Zylinder mittels eines meist elektrischen Steuerkreises bestimmt, womit die Knickbewegungen zwischen den beiden Teilfahrzeugen bewirkt werden können.

Die Teile einer solchen Kolben-Zylinder-Einheit sind im allgemeinen symmetrisch um eine gerade Mittelachse angeordnet, wobei diese Mittelachse quer zur Fahrzeuglängsachse bei der Geradeausfahrt des Fahrzeuges gerichtet ist und der Zylinder einem Konsol des einen, der Kolben einem Konsol des anderen Teilfahrzeuges zugeordnet ist entsprechend den Drehringen des Drehkranzgelenkes. Es handelt sich also um eine selbständige Baugruppe, die meist von Spezialfirmen der Zubehörindustrie. auf den Markt gebracht werden, die unter dem Begriff Stoßdämpferhersteller zusammengefaßt sind. Gelenk- und/oder Fahrzeughersteller beziehen solche "Stoßdämpfer" und bauen sie entsprechend den Bedürfnissen ein.

Ein Beispiel für diese Technik ist EP 0 514 672 A1 derselben Anmelderin.

Bekannt ist es auch, einem Gelenkfahrzeug zwei solcher Stoßdämpfer zuzuordnen, von denen je einer auf jeder Seite der Fahrzeugslängsachse oder einer den Gelenkmittelpunkt schneidenden Querachse angeordnet ist, die Anordnung symmetrisch zu der jeweiligen der genannten Achsen vorgesehen ist und die beiden Stoßdämpfer so ausgebildet und angeordnet sind, daß sie in gleicher Weise zur Dämpfung bzw. Steuerung beitragen.

Bekannt ist es ferner, die Drosselbohrung nicht im Kolben des jeweiligen Stoßdämpfers vorzusehen, also eine "innere" Verbindung zwischen den beiden Zylinderteilräumen zu beiden Seiten des Kolbens vorzusehen, sondern diese Verbindung durch außerhalb der Kolben-Zylinder-Einheit angeordnete Leitungen herzustellen.

Schließlich ist auch die Zuordnung bogenförmiger Stoßdämpfer für Gelenkomnibusse bereits bekannt geworden. Der Bogenmittelpunkt solcher Stoßdämpfer ist der Gelenkmittelpunkt.

Eine solche Einrichtung zur Gelenkstabilisierung ist aus dem nächstliegenden Stand der Technik DE-A-33 40 446 bekannt. An der Innenwand des mit dem einen Teilfahrzeug verbundenen Zylinders sind radial nach innen gerichtete Anschlagstücke ausgebildet, die an einem koaxial im Zylinder angeordneten mit dem anderen Teilfahrzeug verbundenen Drehkörper anliegen, an dem sich radial bis zur Innenwand des Zylinders erstreckende Vorsprünge derart ausgebildet sind, daß der zwischen der Innenwand des Zylinders und dem Drehkörper gebildete Hohlraum in durch die Anschlagstücke und Vorsprünge begrenzte Druckkammer unterteilt ist, die wechselseitig mit einem unter Druck stehenden Fluid einer Steuereinrichtung beaufschlagbar sind. Ein als hydraulisches Stabilisierungsglied ausgebildeter Gelenkstabilisator ist mit zum separaten Knickgelenk koaxialer gemeinsamer Drehachse vorgesehen, dessen Zylinder stets fest mit dem einen Teilfahrzeug und dessen als Kolben oder dergleichen ausgebildeter Drehkörper stets fest mit dem anderen Teilfahrzeug verbunden ist. Drehgelenk und Einrichtung zur Gelenkstabilisierung sind also in grundsätzlich vergleichbarer Bauweise aufgebaut und gleichachsig angeordnet, aber zwei separate Einrichtungen.

Es sind also bei den bisherigen Lösungen Dämpf- bzw. Steuereinrichtungen selbständige Baugruppen, die zwar den Drehkranzgelenken funktionell zugeordnet, trotzdem aber getrennt von den Drehkranzgelenken hergestellt und eingebaut werden, womit es sich zwar um bewährte Techniken handelt, die Lösungen jedoch vielteilig und aufwendig sind.

Der vorliegenden Erfindung liegt demzufolge die Überlegung zugrunde, daß diese Technik ausgereift und bewährt ist, jedoch mit den selbständigen Steuer- und Dämpfungseinrichtungen auch relativ aufwendig ist.

Aufgabe der Erfindung ist es, eine ebenso zuverlässige, aber wesentlich einfachere Lösung des Problems anbieten zu können.

Der Lösung der Aufgabe dient eine Vorrichtung mit den Merkmalen des kennzeichnenden Teils des Anspruchs 1.

Von bekannten Vorrichtungen gemäß dem Gattungsbegriff des Anspruchs 1 unterscheidet sich demnach die Vorrichtung gemäß der vorliegenden Erfindung insbesondere dadurch, daß Drehgelenk und Steuer- bzw. Dämpfungseinrichtung nicht mehr nur funktionell einander zugeordnet sind, sondern die Steuer- bzw. Dämpfungseinrichtung in das Drehgelenk baulich integriert ist, daß der Zylinder der Steuerungs- bzw. Dämpfungseinrichtung von einer Nut des einen, der Kolben der Vorrichtung von einer entsprechenden, in die Nut eingreifenden Rippe des anderen Drehringes gebildet ist, wobei die Rippe in Umfangsrichtung kürzer als die mit einem Strömungsmittel qefüllte Nut ist. Kolben und Zylinder von Dämpf- bzw. Steuereinrichtungen sind in die Drehringe des jeweiligen Drehkranzgelenkes integriert. Die Drehringe sind zwar dadurch etwas komplizierter als übliche Drehringe, insgesamt wird jedoch eine Lösung vorliegen, die billiger herzustellen ist und die mit wesentlich geringerem Gewicht und Bauaufwand zu realisieren ist.

Mit den Merkmalen der Unteransprüche kann die Erfindung gemäß Anspruch 1 zweckmäßig ausgestaltet werden. Dabei wird u.a. auch vorgeschlagen einerseits eine Flüssigkeit für die Dämpf- bzw. Steuereinheiten einzusetzen, die magnetisierbar ist, wobei die Fluidviskosität mittels einer Steuereinrichtung zur Veränderung der Dämpf- bzw. Steuercharakteristik verinderbar ist. In diesem Zusammenhang ist festzustellen, daß solche Flüssigkeiten an sich bekannt und unter der Bezeichnung elektrorheologische Flüssigkeiten auf dem Markt sind und auch die Verwendung solcher Flüssigkeiten bei Stoßdämpfern vorbekannt ist.

Die Erfindung wird nachfolgend anhand der Zeichnung näher erläutert. In der Zeichnung zeigen:

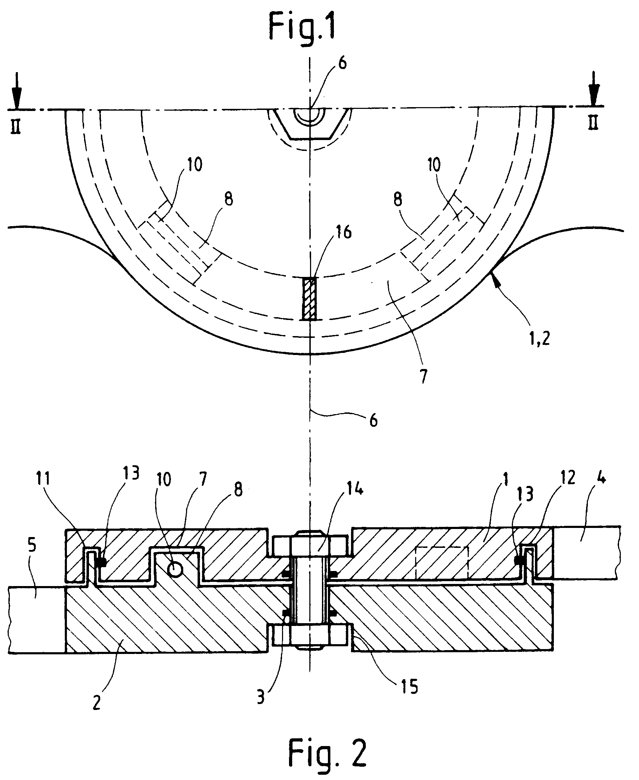

Fig. 1 in schematischer Darstellung die Draufsicht auf ein erfindungsgemäßes Drehkranzgelenk,
Fig. 2 einen Schnitt nach der Linie II-II in Fig. 1,
Fig. 3 eine perspektivische Einbaudarstellung mit Konsolen zur Zuordnung der Drehringe 1,2 zu den beiden Teilfahrzeugen, wobei die Konsolen mit den Bezugszeichen 100 und 101 gekennzeichnet sind und
Fig. 4 den Bereich der Fig. 3, der dort mit "Fig. 4" gekennzeichnet ist.

Das an sich konventionelle Drehkranzgelenk weist als wesentliche Teile einen äußeren Drehring 1, einen inneren Drehring 2 und zwischen äußerem Drehring 1 und innerem Drehring 2 angeordnete Wälzkörper 3 auf. Durch geeignete Mittel, beispielsweise ein Konsol 4 ist der äußere Drehring 1 an dem einen Teilfahrzeug eines Gelenkomnibusses befestigt und ist der innere Drehring 2 in entsprechender Weise, beispielsweise ein Konsol 5 an dem anderen Teilfahrzeug dieses Gelenkomnibusses befestigt. Beim einen der Teilfahrzeuge, insbesondere dem Vorderwagen mit dem Drehring 2, handelt es sich üblicherweise um einen Vorderwagen mit Achsen und Rädern an jedem seiner Enden. Beim anderen Teilfahrzeug, insbesondere dem Hinterwagen mit dem Drehring 1, handelt es sich üblicherweise um einen Hinterwagen des aus Vorder- und Hinterwagen bestehenden Gelenkomnibusses, der an seinem hinteren Ende Achsen und Räder hat und am vorderen Ende in dem Drehkranzgelenk 1 bis 3 mit dem Vorderwagen verbunden ist. Drehringe 1, 2 und Wälzkörper 3 sind so einander zugeordnet, daß die Abstützung des Hinterwagens auf dem Vorderwagen durch die Übertragung von vertikalen Druckkräften oder von vertikalen Zugkräften erfolgen kann, d.h. der Drehring des Hinterwagens auf dem Drehring des Vorderwagens abgestützt oder am Drehring des Vorderwagens aufgehängt sein kann. Außerdem werden Brems- und Antriebskräfte durch das Drehkranzgelenk 1 bis 3 hindurch zwischen Vorder- und Hinterwagen übertragen. Die beiden Drehringe 1, 2 sind um die Gelenkhochachse 6 relativ zueinander verstellbar; die Gelenkhochachse 6 ist die Knickachse des Gelenkomnibusses, um die sich Vorder- und Hinterwagen relativ zueinander verstellen können, um Kurven durchfahren zu können. Diese Bewegungen sollen mit einer erfindungsgemäßen Vorrichtung gedämpft werden, die eine Kolben-Zylinder-Einheit ist.

Der Zylinder dieser Einheit wird von einer Ringnut 7 gebildet, die in einem vorgegebenen radialen Abstand parallel zum Außenumfang des Drehringes 7 verläuft. Der Kolben der Einheit wird von einer Rippe 8 gebildet, die Teil des Drehringes ist, in die Ringnut 7 hineinragt und im Querschnitt dem der Ringnut angepaßt ist. Die Ringnut 7 hat eine wesentlich größere Länge als die Rippe 8, so daß in Umfangsrichtung vor- und hinter der Rippe 8 eine Kammer gebildet ist, wobei beide Kammern mit einem Fluid gefüllt und durch eine drosselnde Längsbohrung 10 in der Rippe 8 miteinander verbunden sind. Finden Relativbewegungen zwischen den beiden Drehringen 1, 2 um die Gelenkachse 6 statt, so wird Fluid von der Kammer am einen Ende der Rippe 8 durch die Drosselbohrung 10 hindurch in die Kammer am anderen Ende der Rippe 8 verdrängt, die Drosselwirkung bestimmt den Grad der Dämpfung der Relativbewegungen. Ein Endanschlag für jede Bewegungsrichtung bestimmt den möglichen Verstellweg und damit den zulässigen Knickwinkel zwischen den Teilfahrzeugen. Als Endanschlag dient in einfachster Weise das jeweilige Ende der Ringnut, an dem die Rippe mit dem jeweiligen Ende in Anlage kommt.

Bei dieser Lösung empfiehlt sich in besonderer Weise die Anwendung eines Magnetfluids, d.h. eines mit magnetisierbaren Partikeln durchsetzten Fluids, auf das veränderbare Magnetkräfte aufgebracht werden können, um die Strömungscharakteristik des Fluids und damit trotz unveränderbarer Drosselbohrung 10 die Dämpfungscharakteristik verändern zu können.

Bei einer Variante wird die Drosselbohrung 10 durch eine äußere Verbindungsleitung zwischen den beiden Fluidkammern ersetzt, in die ein steuerbares Drosselventil eingebaut ist, um die Steuerung der Knickbewegungen oder eine veränderbare Dämpfungscharakteristik bewirken zu können.

Soll die Dämpfungseinrichtung von Führungskräften entlastet werden, so können separate Führungsmittel 11, 12 vorgesehen sein, denen notwendige Dichtungsmittel 13 zugeordnet sein können.

Um die vorbeschriebene Anordnung unterbringen zu können, müssen die Drehringe 1, 2 eine entsprechende Breite haben oder sie können als Scheiben ausgebildet sein, wobei dann die Wälzkörper 3 zwischen einem Zapfen 14 der einen Scheibe und einer Führung 15 der anderen Scheibe angeordnet sein können.

Zweckmäßig ist eine Vervielfachung der vorbeschriebenen Anordnung, wobei eine umlaufende Ringnut 7 durch Rippen 16 in mehrere, in Umfangsrichtung aufeinanderfolgende Abschnitte unterteilt ist, und in jedem der Ringnutabschnitte ein Rippenabschnitt ein Kammerpaar bildet, zwischen dessen Teilkammern Fluid in der vorbeschriebenen Weise verdrängt wird.

Bei der erfindungsgemäßen Lösung mit in die Drehinge integrierter Dämpf- bzw. Steuereinrichtung und dem gesteuert magnetisierbaren Betriebfluid wird es als besonders zweckmäßig angesehen, das Drehkranzgelenk nicht als Wälzlager sondern als Gleitlager auszubilden. Die Wälzkörper 3 entfallen und die beiden Drehringe 1, 2 stützen sich in Gleitflächen ab. Dadurch kann die von den Dämpfeinrichtungen aufzubringende Dämpfung der Relativbewegungen zwischen den Drehringen verringert werden und mittels Steuerung der Dämpfwirkung durch Beeinflussung der Viskosität des magnetisierbaren Fluids kann in einfacher Weise die gewollte Dämpf- bzw. Steuercharakteristik genau bestimmt werden. Wegen ihrer Funktionstüchtigkeit, ihrer Funktionsgenauigkeit und wegen ihrer baulichen Einfachheit ist also letzlich eine Einrichtung optimal; bei der die Dämpf- bzw. Steuereinrichtung mit Kolben und Zylinder in die Drehringe baulich integriert ist, bei der die Drehringe mit Gleitreibungsflächen aufeinander abgestützt sind und bei der als Funktionsfluid eine magnetisierbare Flüssigkeit verwendet wird, deren Viskosität einer Steuereinrichtung veränder- bzw. einstellbar ist.

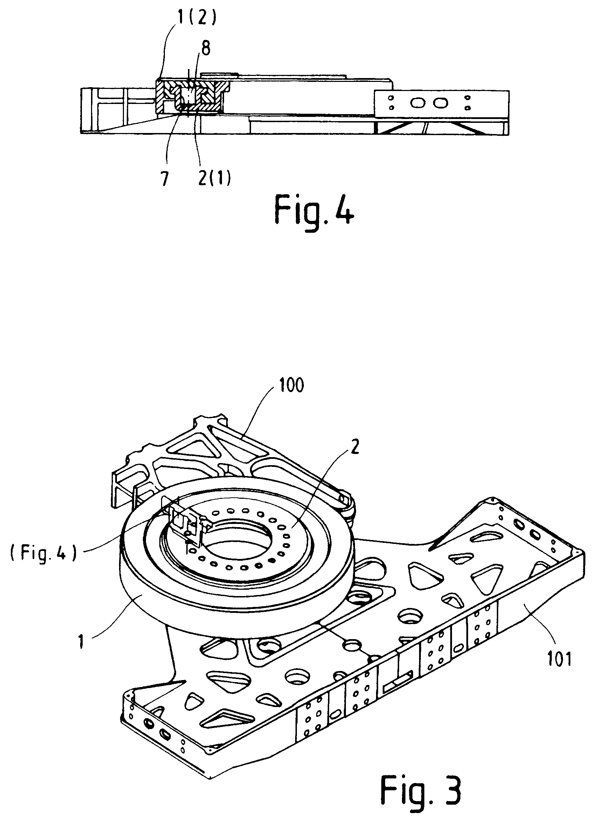

Die Fig. 3, 4 sind angefügt, um einmal die Zuordnung der beiden Drehringe 1, 2 des Drehkranzgelenkes zu den beiden Teilfahrzeugen und zum anderen das Ineinandergreifen beider Drehringe 1,2 zur Bildung, der Dämpfungs- bzw. Steuereinrichtung zu zeigen. Der eine (1) der beiden Drehringe 1,2 ist an einem Konsol 100 gehalten, das am einen der beiden Teilfahrzeuge anzuschrauben ist. Der andere (2) der beiden Drehringe 1, 2 ist an einem zweiten Konsol 101 gehalten, das am anderen der beiden Teilfahrzeuge aufzuschrauben ist (Fig. 3, eine perspektivische Darstellung des Drehkranzgelenkes mit seinen Anschlüssen). Gemäß Fig. 4 (ein Schnitt durch den in Fig. 3 dargestellten Gelenkbereich bzw. die eine Hälfte eines solchen Schnittes) greifen die beiden Drehringe 1, 2 gleichsam nut- und federartig ineinander, indem der eine Drehring 1 mit der Leiste 8 in eine Ringnut 7 des anderen Drehringes 2 eingreift, wobei sowohl Leiste 8 als auch Ringnut 7 der Außenkontur der Drehringe 1, 2 folgen, die Leiste wesentlich kürzer ist als die Ringnut, so daß sich an beide Leistenenden eine Kammer anschließt, die durch eine Trennwand in zwei Teilkammern unterteilt ist, die über eine Drosselbohrung miteinander verbunden sind, durch die bei Drehbewegungen des einen Drehringes gegenüber dem anderen Drehring Funktionsfluid verdrängt wird und, da diese Verdrängnis entgegen dem Drosselwiderstand erfolgt, eine Dämpfung der Drehbewegungen erfolgt. Dies ist aber eine bei Stoßdämpfern übliche Funktion. Die Erfindung ist die Integration eines solchen Stoßdämpfers in die Drehringe 1,2. Der Schnitt gemäß Fig. 4 ist als Phantomdarstellungen in Fig. 3 eingezeichnet.

## Patentansprüche

1. Vorrichtung zur Steuerung bzw. Dämpfung der Knickbewegungen zwischen Teilfahrzeugen eines Gelenkomnibusses um die Hochachse (6) eines Drehkranzgelenkes (1-3), in dem die beiden Teilfahrzeuge um die Hochachse (6) relativ zueinander schwenkbar miteinander verbunden sind, wobei ein Drehring (1 bzw. 2) des Drehkranzugelenkes (1-3) dem einen, ein zweiter Drehring (2 bzw.1) des Drehkranzgelenkes dem zweiten Teilfahrzeug zugeordnet ist und wobei weiter die Steuerungs- bzw. Dämpfungsvorrichtung eine Kolben-Zylinder-Einheit ist, dadurch gekennzeichnet, daß der Kolben (7) der Steuerungs- bzw. Dämpfungsvorrichtung (7,8) dem einen Drehring (2), der Zylinder (7) der Vorrichtung in dem anderen Drehring (1) des Drehkranzgelenkes (1-3) in der Form zugeordnet ist, daß der Zylinder der Steuerungs- bzw. Dämpfungsvorrichtung (7,8) von einer Nut (7) des einen, der Kolben der Vorrichtung von einer entsprechenden, in die Nut (7) eingreifenden Rippe (8) des anderen Drehringes (1) gebildet ist, wobei die Rippe in Umfangsrichtung kürzer als die mit einem Strömungsmittel gefüllte Nut ist.

2. Vorrichtung nach Anspruch 1, **dadurch gekennzeichnet**, daß Nut und Rippe der Steuerungs- bzw. Dämpfungsvorrichtung (7,8) in vorgegebenen radialen Abständen parallel zum Außenumfang des jeweiligen Drehringes (1 ,2) verlaufen.

3. Vorrichtung nach Anspruch 1 oder 2, **dadurch gekennzeichnet**, daß Nut und Rippe (7,8) einen rechteckigen Querschnitt haben.

4. Vorrichtung nach einem der Ansprüche 1 bis 3, **dadurch gekennzeichnet**, daß die beiden Stirnseiten der Rippe (8) durch eine Drosselbohrung (10) miteinander verbunden sind und die Nut sich über den gesamten Umfang des Drehringes erstreckt und im Bereich zwischen den Enden der Rippe eine feste Sperrwand (16) aufweist.

5. Vorrichtung nach einem der Ansprüche 1 bis 4, **gekennzeichnet durch** die Verwendung eines magnetisierbaren Fluids und die Verwendung einer Steuereinrichtung zur Veränderung der Fluidviskosität.

6. Vorrichtung nach einem der Ansprüche 1 bis 5, **gekennzeichnet durch** eine Nut (7), in der durch Trennwände (16) mehrere Nutabschnitte gebildet sind und in jedem Nutabschnitt von einem Rippenabschnitt zwei gedrosselt miteinander verbundene, mit Drosselfluid gefüllt, volumenveränderbare Fluidkammern gebildet sind.

7. Vorrichtung nach einem der Ansprüche 1 bis 6, **dadurch gekennzeichnet**, daß die Fluidkammern an den beiden Enden der Rippe bzw. jedes Rippenabschnittes durch äußere Drosselleitungen mit einstellbarer Drosselwirkung miteinander verbunden sind.

8. Vorrichtung nach einem der Ansprüche 1 bis 7, **gekennzeichnet durch** ihre Verwendung in Verbindung mit einem Drehkranzgelenk, dessen beiden Drehringe in der Art von Gleitlagern zusammenwirken.

## Claims

1. A device for controlling or damping the bending motions between component vehicles of an articulated bus around the vertical axis (6) of a turntable joint (1 - 3), wherein the two component vehicles are connected to one another so as to be pivotable relative to one another around the vertical axis (6), a turntable ring (1, 2) of the turntable joint (1 - 3) being associated with one component vehicle and a second turntable ring (2, 1) of the turntable joint being associated with the second component vehicle and the control or damping device being a piston-cylinder unit, characterised in that the piston (7) of the control or damping device (7, 8) is associated with one turntable ring (2), and the cylinder (7) of the device is disposed in the other turntable ring (1) of the joint (1 - 3) so that the cylinder of the control or damping device (7, 8) is formed by a groove (7) in one ring (1) and the piston of the device is formed by a corresponding rib (8) engaging in the groove (7) and belonging to the other ring (1), the rib being shorter in the peripheral direction than the groove, which is filled with a flow medium.

2. A device according to claim 1, characterised in that the groove and the rib of the control and damping device (7, 8) extend with preset radial spacings parallel to the outer periphery of the respective turntable ring (1, 2).

3. A device according to claim 1 or 2, characterised in that the groove and the rib (7, 8) have a rectangular cross-section.

4. A device according to any of claims 1 to 3, characterised in that the two end faces of the rib (8) are interconnected by a throttle bore (10) and the groove extends over the entire periphery of the turntable ring and has a fixed barrier wall (16) in the region between the ends of the rib.

5. A device according to any of claims 1 to 4, characterised by use of a magnetisable fluid and use of a control device for altering the viscosity of the fluid.

6. A device according to any of claims 1 to 5, characterised by a groove (7) in which a number of portions are formed by partitions (16) and variable-volume fluid chambers are formed by a rib portion in each groove portion and are connected to one another in throttled manner and filled with throttle fluid.

7. A device according to any of claims 1 to 6, characterised in that the fluid chambers at the two ends of the rib or of each rib portion are connected to one another via external throttle lines having an adjustable throttling effect.

8. A device according to any of claims 1 to 7, characterised by use in conjunction with a turntable joint having two turntable rings which co-operate in the same manner as sliding bearings.

## Revendications

1. Dispositif pour commander et amortir les mouvements d'articulation entre les parties de véhicule d'un bus articulé autour de l'axe vertical (6) d'une articulation à couronne de pivotement (1 à 3), dans lequel les deux parties du véhicule sont reliées entre elles avec une possibilité de pivotement l'une par rapport à l'autre autour de l'axe vertical (6), un anneau de pivotement (1 ou 2) de l'articulation à couronne de pivotement (1 à 3) étant associé à l'une des parties de véhicule, et un second anneau de pivotement (2 ou 1) de l'articulation à couronne de pivotement étant associé à la seconde partie de véhicule, le dispositif de commande ou d'amortissement étant par ailleurs un ensemble à piston et cylindre, caractérisé en ce que le piston (8) du dispositif de commande ou d'amortissement (7, 8) est associé à l'un des anneaux de pivotement (2) de l'articulation à couronne de pivotement (1 à 3) et le cylindre (7) du dispositif à l'autre anneau de pivotement (1), à savoir que le cylindre du dispositif de commande ou d'amortissement (7, 8) est formé par une gorge (7) de l'un des anneaux de pivotement et le piston du dispositif par une nervure correspondante (8) de l'autre anneau de pivotement (1) qui s'engage dans la gorge (7), la nervure étant plus courte dans la direction circonférentielle que la gorge remplie d'agent d'écoulement.

2. Dispositif selon la revendication 1, caractérisé en ce que la gorge et la nervure du dispositif de commande ou d'amortissement (7, 8) s'étendent parallèlement à la périphérie extérieure de leur anneau de pivotement respectif (1, 2) avec un écartement radial prédéfini.

3. Dispositif selon la revendication 1 ou 2, caractérisé en ce que la gorge et la nervure (7, 8) possèdent une section rectangulaire.

4. Dispositif selon l'une des revendications 1 à 3, caractérisé en ce que les deux faces frontales de la nervure (8) communiquent entre elles par un orifice d'étranglement (10), et la gorge s'étend sur toute la périphérie de l'anneau de pivotement et comporte une paroi d'arrêt fixe (16) dans la zone comprise entre les extrémités de la nervure.

5. Dispositif selon l'une des revendications 1 à 4, caractérisé par l'emploi d'un fluide magnétisable et par l'emploi d'un dispositif de commande pour modifier la viscosité du fluide.

6. Dispositif selon l'une des revendications 1 à 5, caractérisé par une gorge (7) dans laquelle plusieurs segments de gorge sont formés par des cloisons (16), et deux chambres de fluide à volume variable reliées entre elles de manière étranglée et remplies de fluide étranglé sont formées dans chaque segment de gorge par un segment de nervure.

7. Dispositif selon l'une des revendications 1 à 6, caractérisé en ce qu'aux deux extrémités de la nervure ou de chaque segment de nervure les chambres de fluide communiquent entre elles par des conduites extérieures d'étranglement à effet d'étranglement réglable.

8. Dispositif selon l'une des revendications 1 à 7, caractérisé en ce qu'il est mis en oeuvre en association avec une articulation à couronne de pivotement dont les deux anneaux de pivotement coopèrent à la manière de paliers à glissement.
